# EUROPEAN PATENT SPECIFICATION

(11) **EP 1 656 030 B1**
(45) Date of publication and mention of the grant of the patent: **26.01.2011**
(21) Application number: 03768107.9
(22) Date of filing: 13.11.2003
(51) Int. Cl.: A23C 3/02, A23C 9/142, A23C 9/15, A23C 7/04

(54) **A METHOD FOR PROCESSING MILK**
VERFAHREN ZUR VERARBEITUNG VON MILCH
PROCEDE DE TRAITEMENT DU LAIT

(30) Priority: 19.06.2003 IT PR20030047
(43) Date of publication of application: 17.05.2006
(73) Proprietor: PARMALAT S.p.A., 43044 Collecchio (PR) (IT)
(72) Inventor: COBIANCHI, Paolo, I-43100 Parma (IT); GIUFFREDI, Francesco, I-43044 Madregolo di Collechio (IT); FERRARI, Filippo, I-43044 Gaiano di Collecchio (IT)
(74) Representative: Petraz, Gilberto Luigi
(86) International application number: PCT/IT2003/000737
(87) International publication number: WO 2004/110158

(56) References cited:
- WO-A-00/74495
- GB-A- 1 057 286
- US-A- 5 401 523
- US-A- 5 683 733
- US-A- 5 935 632
- US-A1- 2002 012 732
- KOSIKOWSKI F V ET AL: "MICROFILTRATION, ULTRAFILTRATION, AND CENTRIFUGATION SEPARATION AND STERILIZATION PROCESSES FOR IMPROVING MILK AND CHEESE QUALITY" JOURNAL OF DAIRY SCIENCE, AMERICAN DAIRY SCIENCE ASSOCIATION. CHAMPAIGN, ILLINOIS, US, vol. 73, no. 6, 1 June 1990 (1990-06-01), pages 1411-1419, XP000141141 ISSN: 0022-0302
- MAUBOIS J L: "NEW APPLICATIONS OF MEMBRANE TECHNOLOGY IN THE DAIRY INDUSTRY" AUSTRALIAN JOURNAL OF DAIRY TECHNOLOGY, DAIRY INDUSTRY ASSN AUSTRALIA, HIGHETT VIC, AU, vol. 46, no. 2, 1 November 1991 (1991-11-01), pages 91-95, XP000246442 ISSN: 0004-9433

## Description

### TECHNICAL FIELD AND BACKGROUND ART.

The present invention relates to a method for processing milk.

A method for processing milk according to the preamble of claim 1 is known from WO 94 26121.

Said milk processing method substantially comprises the following steps:
- centrifuging the milk (pre-heated to a 45°-65°C) to separate it into a creamy fraction and a skimmed fraction, both containing spores and bacteria;
- micro-filtering the skimmed fraction to separate it into a concentrated retentate containing the bacterial cells and into a permeate in the form of skimmed fraction with low bacterial content;
- heat treating the creamy fraction (at 70°-150°C for 0.5-25 seconds with subsequent cooling to 45°-65°C);
- mixing the heat treated creamy fraction with the skimmed fraction with reduced microbe content to obtain a milk having the desired fat content.

The aforementioned method is characterised by the fact that it comprises a step of recirculating the retentate containing the bacterial cells and obtained from micro-filtering; said recirculating step brings the retentate back to the centrifuging step.

The final milk is then treated again at 60-105°C for 0-25 seconds and then cooled to 2-10°C.

It is possible to adopt a bypass for the cream, so that it will not flow through the pasteuriser, and a bypass for the skimmed milk flowing out of the centrifuge, to avoid the micro-filtering unit.

A similar method is also described in WO 96 36238.

Micro-filtering can take place in multiple distinct stages, as taught for instance by WO 02 63969, US 2002/0012732 or WO 00 74495.

This latter document provides for two micro-filtering steps. The first step of micro-filtering the milk allows to obtain a permeate which undergoes a subsequent micro-filtering step in such a way as to be safeguarded against the rupture of one of the two membranes (the simultaneous rupture of both membranes is highly unlikely).

In accordance with a first embodiment variation, the method provides for the retentate collected after the second micro-filtering step to be sent again to the first micro-filtering step (recirculating the second retentate). In accordance with a second embodiment variation, the method provides for the second permeate to be mixed with a sterilised creamy fraction, to obtain a milk having a determined fat content.

The main drawback of the aforesaid methods derives from the need to subject the milk and the creamy part to one or more heat treatments at high temperature, to assure that bacteria are all destroyed, but this leads to a denaturation of the original nutrients and to a worsening of the original organoleptic characteristics.

There is US 5401523 also known from a method for pressing milk with a low bacteria content by homogenising raw milk and within about 5 minutes from the homogenisation by subjecting it to a dynamic microfiltration, to yield a filtrate which has a lower bacterial content than the initial raw milk.

### DISCLOSURE OF THE INVENTION.

An object of the present invention is to eliminate the aforesaid drawbacks, making available a method for processing milk which allows an effective elimination of bacteria, together with a long duration of the milk, estimated to be at least 15-20 days, if preserved at a temperature of about 2-6°C.

An additional object is to obtain this in the context of a simple, economical and reliable solution.

Said objects are fully achieved by the method of the present invention, which is characterised by the content of the claims set out below and in particular in that before separating the milk into a creamy part and a skimmed part there is a step of pre-processing all the milk, in one or more stages, by at least partially lowering the bacterial charge and removing somatic cells.

Said pre-treatment preferably consists of a centrifugal clarification.

The skimmed part of the milk is preferably subjected to heating to about 45-55°C for 10-20 seconds before micro-filtering.

Before the reduction of the bacterial charge and somatic cells, the milk undergoes pre-heating to about 50-55°C.

### BEST MODE FOR CARRYING OUT THE INVENTION.

This and other characteristics shall become more readily apparent from the following description of a preferred embodiment, illustrated purely by way of non limiting example in the accompanying drawing tables in which:
- Figure 1 shows the method with the possible variations in dashed lines;

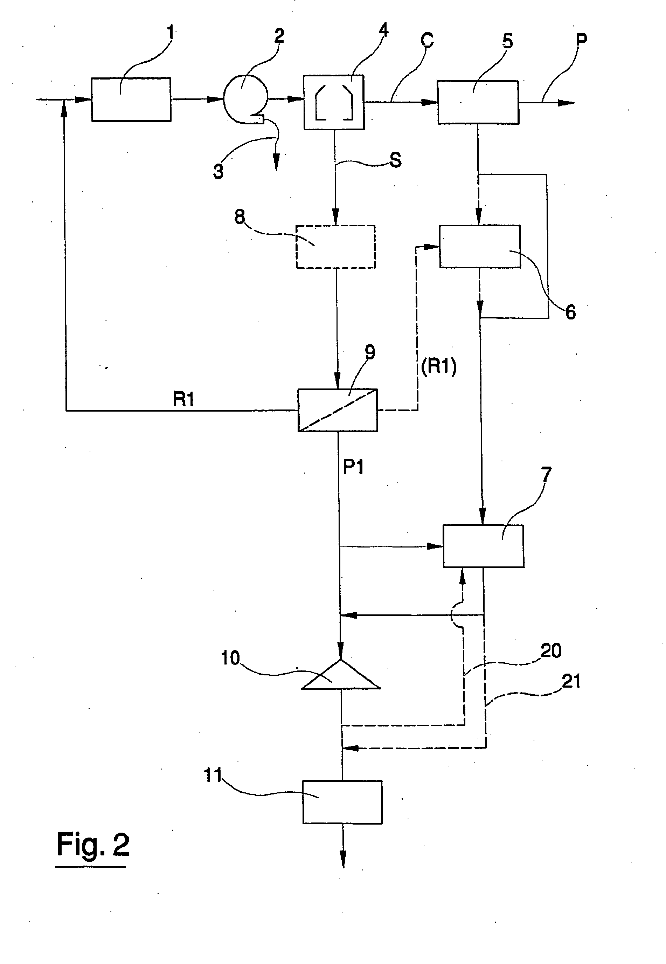

- Figure 2 shows a simplified method with a single micro-filtration stage;
- Figure 3 shows a method according to a variation of Figure 1.

With reference to the figures, raw milk is fed to a pre-heating stage 1 where it is brought to a temperature of a about 45-65°C to be then originally fed to a centrifugal clarification treatment 2 or otherwise a treatment which eliminates about 70-90% of the bacterial charge or of the micro-organisms and removes most of the microbial and cellular impurities and part of any somatic cells which may be present. Centrifugal clarification preferably takes place through the use of a centrifugal apparatus which discharges bacteria and sediments through an appropriate sludge chamber. Normally, clarification leads to obtaining a portion of over 99% of milk that is at least partially free of bacteria and a waste 3 of less than 1% constituted by a bacterial concentrate which may be recycled after sterilisation at a temperature exceeding 120 °C.

The centrifugal clarification treatment can be single or multiple, through the use of multiple centrifugal apparatuses arranged in series.

The partially purified milk is fed to a centrifugal separation stage 4 of a substantially known type, wherefrom exits a creamy portion C and a skimmed portion S.

The creamy portion, after a standardisation stage 5 in which the final product is defined by correcting its fat percentage, yields a surplus of cream P which is removed and a creamy part which undergoes a homogenisation treatment 7, possibly after undergoing high temperature pasteurisation 6 (preferably 120°C for 2-10 seconds, and in any case exceeding 100°C).

The skimmed portion S can undergo an original heat treatment 8 (preferably heated to 45-65°C maintaining said temperature for 10-20 seconds) before undergoing micro-filtration 9 in one or more stages, according to the prior art.

The heat treatment 8 has an advantageous protein stabilisation and bacterial charge pre-lowering effect.

Normally, micro-filtration yields a permeate with low bacterial and somatic cell content, and a retentate constituted by skimmed milk containing microbes and somatic cells.

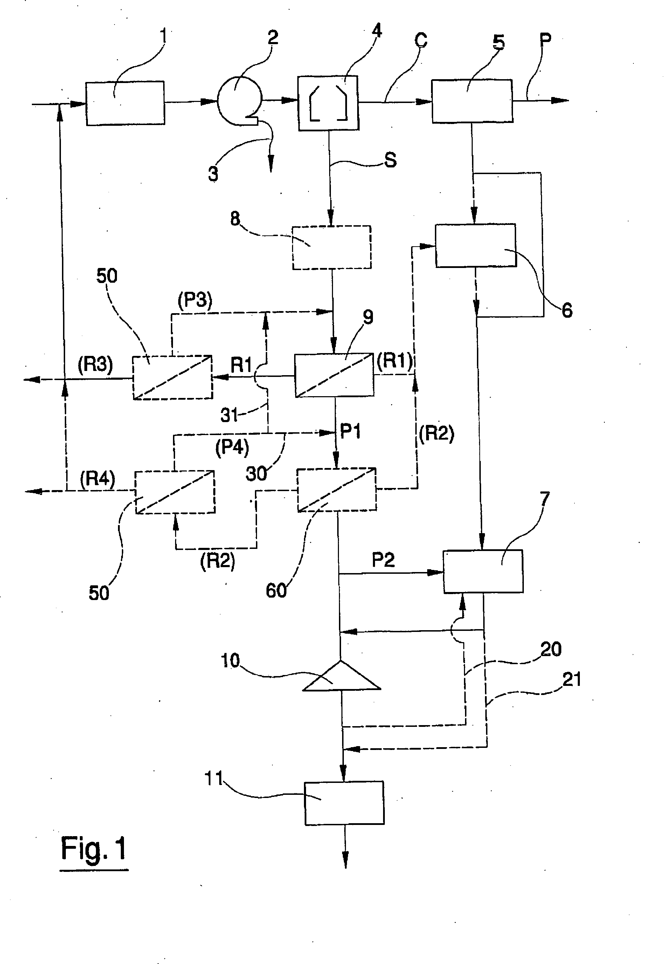

In the case of a single state, the retentate R1 is again sent to the input of the pre-heating 1 or is sent to the high temperature pasteurisation stage 6, whilst in the case of multiple stages the retentate R1 of the first stage is normally sent at the input of a subsequent micro-filtration stage, according to the diagram of Figure 1, in which there may be one or more type 60 stages and one or more type 50 stages.

Normally, in the case of the permeate, the subsequent stages use filtering membranes with pores of equal or progressively smaller (e.g. 0.8 and 0.5 µm) diameter than those of the first stage (for example 1.4 µm).

Figure 1 shows the case of a single cascaded stage for micro-filtering the permeate, but there may be multiple cascaded filters 60 for micro-filtering the permeate.

The retentate (R1, or R2, or R3, ...) of the last stage can be further recycled to the input of the pre-heating 1, or it may be definitively discharged.

If the creamy part C does not undergo high temperature pasteurisation 6, the permeate (P1 or P2...or Pn) is partly aspirated by the homogenisation 7 and partly instead directly undergoes a pasteurisation 10 at a temperature of about 72-75°C for at least 15 seconds.

If instead the creamy part undergoes high temperature pasteurisation 6, then the permeate can undergo the same treatment or, according to an embodiment variation illustrated with dashed lines 20 and 21, the homogeniser receives previously pasteurised milk 10 and combines with cream that had already undergone heat treatment in 6.

Lastly, cooling 11 is provided at a temperature lower than ambient temperature and preferably at 2-6°C.

From the homogenisation stage 7 therefore exits a product (partly constituted by a creamy part and partly constituted by a skimmed part) which can be sent to pasteurisation 10 or directly to cooling 11.

In the case shown in Figure 1, where four micro-filtering stages are considered, the retentate R2 of the second stage is sent to the input of the fourth micro-filtering stage or to the high temperature pasteurisation stage 6, whilst the retentate R3 exiting the third stage is discharged or fed back to the pre-heating 1. The retentate R4 exiting the fourth stage is discharged or fed back to the pre-heating 1.

The permeate P3 exiting the third stage is sent to the input of the first micro-filtering stage, whilst the permeate P4 exiting the fourth stage can be sent to the input of the second micro-filtering stage (dashed line 30) or to the input of the first micro-filtering stage (dashed line 31) together with the permeates exiting the type 50 stages.

The permeate of the last stage is preferably fed back to the input of the first micro-filtering stage as permeate exiting a micro-filtering of a retentate that has high bacterial concentration.

The method of the present invention, as a result of the original treatment 2 for the partial removal of bacteria and somatic cells, allows to reach the centrifugal separation 4 with a higher quality milk (because it undergoes less pasteurisation) and hence to obtain a final product, at the end of the whole process, whose characteristics are such as to provide it with greater duration, and in fact studies conducted by the Applicant have allowed experimentally to observe a duration even greater than 20 days, provided it is preserved at a temperature of about 2-6°C.

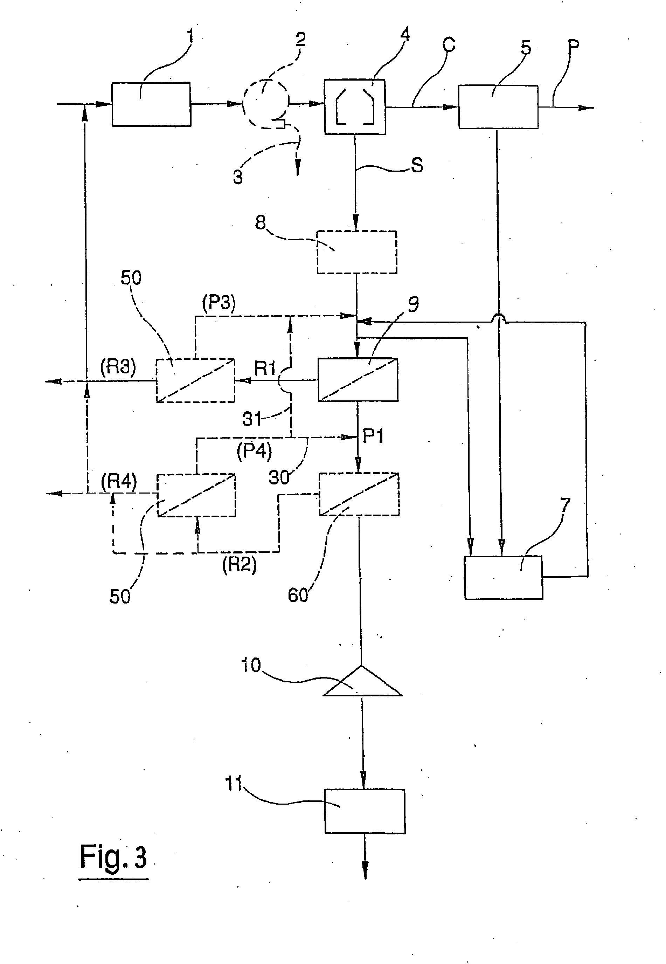

With reference to Figure 3, an embodiment variation is illustrated in which there is no pre-treatment 2 of all the milk with bacterial charge and somatic cell removal, but the creamy part C, after the standardisation stage 5, is sent to the homogenisation stage 7 together, originally, to a portion of skimmed milk S drawn before micro-filtering. The milk exiting the homogenisation stage 7 is sent directly and originally to micro-filtering together with the skimmed part S exiting the centrifugal separation 4.

The purpose is to obtain micro-filtered milk without processing the creamy part C at high temperature.

The cream part C is originally homogenised at high pressure (for example about 300 bar, so that the diameter of the fat globules is smaller (about 0.2 micron) than the diameter of the pores of the membranes used in micro-filtering.

## Claims

1. A method for processing milk, of the type comprising the steps of:
- separating (4) the milk into a creamy part (C) and into a skimmed part(S);
- micro-filtering (9) the skimmed part, in one or more stages by using filtering pores membranes, generating a permeate with low bacterial charge and a retentate in which are concentrated any bacteria and somatic cells;
- pasteurising (10) the permeate, possibly after adding a fraction of creamy part (C) to the permeate;
- cooling (11) to a preservation temperature lower than ambient temperature, **characterised in that**, before separating (4) the milk into a creamy part and into a skimmed part there is a step of pre-processing (2) all the milk, in one or more stages, by means of an at least partial removal of bacterial charge and somatic cells which eliminates about 70-90% of the bacterial charge or of the micro-organisms and removes most of the microbial and cellular impurities and part of any somatic cells which may be present in the milk, wherein said partial removal of bacterial charge and somatic cells is obtained by centrifugal clarification that takes place through the use of a centrifugal apparatus which discharges bacteria and sediments through an appropriate sludge chamber, said clarification leading to obtaining a portion of over 99% of milk that is at least partially free of bacteria and a waste (3) of less than 1% constituted by a bacterial concentrate.

2. A method as claimed in claim 1, wherein the skimmed part (S) of the milk is subjected to heating (8) to about 45-65°C for 10-20 seconds before micro-filtering (9).

3. A method as claimed in claim 1, wherein at least a fraction of the 20 creamy part (C) undergoes a pasteurisation treatment (6) at over 100°C before a step of homogenisation (7) and mixing with the skimmed part which precedes the final cooling (11).

4. A method as claimed in claim 1, wherein at least a fraction of the creamy part (C) is homogenised and subsequently mixed with the skimmed part (S) before pasteurisation (10).

5. A method as claimed in claim 1, wherein pasteurisation (10) takes place at about 72-75°C for at least 15 seconds.

6. A method as claimed in claim 1, wherein the milk, before the reduction of bacterial charge and somatic cells, undergoes pre-heating (1) to about 45-65°C.

7. A method as claimed in claim 1, wherein the retentate is fed back to the input of the step (2) of reduction of bacterial charges and somatic cells, or undergoes pasteurisation (6) at over 100°C, or is sent to an additional micro-filtering stage (9).

8. A method as claimed in claim 1, wherein the permeate is homogenised (7) and then pasteurised (10) at 72-75°C.

9. A method as claimed in claim 1, wherein the reduction of bacterial charge and the removal of somatic cells takes place by means of centrifugal clarification.

10. A method for processing milk, of the type comprising the steps of:
- separating (4) the milk into a creamy part (C) and into a skimmed part (S); micro-filtering (9) the skimmed part, in one or more stages by using filtering pores membranes, generating a permeate with low bacterial charge and a retentate in which are concentrated any bacteria and somatic cells;
- pasteurising (10) the permeate, possibly after adding a fraction of creamy part (C) to the permeate;
- cooling (11) to a preservation temperature lower than ambient temperature, **characterised in that** a homogenisation step (7) is provided between the creamy part (C) exiting a standardisation stage (5) and a skimmed part (S), at high pressure of about 300 bar, so that the diameter of the fat globules is smaller, about 0.2 micron, than the diameter of the pores of the membranes used in micro-filtering, the milk resulting from said homogenisation being sent to the input of the micro-filtration together with the skimmed part (S) exiting a centrifugal separation stage (4),
before the separation (4) of the milk into a creamy part and into a skimmed part there may be provided a possible step of pre-treating (2) all the milk, in one or more stages, by means of an at least partial removal of bacterial charge and somatic cells.

11. A method as claimed in claim 10, wherein homogenisation (7) takes place at such a high pressure that the diameter of the fat globules in the product exiting the homogenisation is no greater than the diameter of the pores of the membranes used for micro-filtering.

## Patentansprüche

1. Verfahren zur Verarbeitung von Milch, welches die Schritte enthält:
Trennen (4) der Milch in einen cremigen Anteil (C) und einen abgeschöpften Anteil (S);
Mikrofiltern (9) des abgeschöpften Anteils, in einem oder mehreren Stufen, unter Verwendung von Filterporenmembranen, Erzeugen eines Permeats mit geringer bakterieller Charge und eines Rückstandes, in welchem Bakterien und somatische Zellen konzentriert sind;
Pasteurisieren (10) des Permeats, möglicherweise nach Hinzufügung eines Anteils eines cremigen Anteils (C) zum Permeat;
Kühlen (11) auf eine Haltbarkeitstemperatur, welche geringer als die Umgebungstemperatur ist,
**dadurch gekennzeichnet, dass** vor dem Trennen (4) der Milch in einen cremigen Anteil und in einen abgeschöpften Anteil, ein Schritt zur Vorverarbeitung (12) der gesamten Milch, in einem oder in mehreren Stufen, vorliegt, mittels eines zumindest teilweise Entfernens der bakteriellen Charge und der somatischen Zellen, welches ungefähr 70 bis 90% der bakteriellen Charge oder der Mikroorganismen beseitigt, und den Großteil der mikrobiologischen und zellularen Verunreinigungen und einen Teil von jeglichen somatischen Zellen entfernt, welche in der Milch vorliegen können, wobei das teilweise Entfernen der bakteriellen Charge und der somatischen Zellen durch eine Zentrifugal-Klärung erlangt wird, welche durch die Verwendung von einem Zentrifugalgerät stattfindet, welches Bakterien und Sedimente über eine geeignete Schlammkammer ausstößt, wobei die Klärung zum Erlangen eines Abschnittes von mehr als 99% von Milch führt, welche zumindest teilweise frei von Bakterien und einem Schmutzstoff (3) ist, von weniger als 1%, gebildet durch ein bakterielles Konzentrat.

2. Verfahren nach Anspruch 1, bei welchem der abgeschöpfte Anteil (S) der Milch einer Erwärmung (8) auf ungefähr 45 bis 65°C für 10 bis 20 Sekunden vor der Mikrofilterung (9) unterworfen wird.

3. Verfahren nach Anspruch 1, bei welchem zumindest ein Anteil von dem 20 cremigen Anteil (C) einer Pasteurisierungsbehandlung (6) bei mehr als 100°C unterläuft, und zwar vor einem Schritt einer Homogenisierung (7) und einem Vermischen mit dem abgeschöpften Anteil, welches der letztendlichen Kühlung (11) vorausgeht.

4. Verfahren nach Anspruch 1, bei welchem zumindest ein Anteil des cremigen Anteils (C) homogenisiert wird, und nachfolgend mit dem abgeschöpften Anteil (S) vor einem Pasteurisieren (10) gemischt wird.

5. Verfahren nach Anspruch 1, bei welchem das Pasteurisieren (10) bei ungefähr 72 bis 75°C für zumindest 15 Sekunden stattfindet.

6. Verfahren nach Anspruch 1, bei welchem die Milch vor der Reduktion der bakteriellen Charge und der somatischen Zellen einer Vorerwärmung (1) auf ungefähr 45 bis 65°C unterläuft.

7. Verfahren nach Anspruch 1, bei welchem der Rückstand zur Eingabe des Schrittes (2) der Reduktion von bakteriellen Chargen und somatischen Zellen zurückgeführt wird, oder einer Pasteurisierung (6) bei mehr als 100°C unterläuft oder an eine zusätzliche Mikrofilterungsstufe (9) überführt wird.

8. Verfahren nach Anspruch 1, bei welchem das Permeat homogenisiert (7) wird und dann bei 72 bis 75°C pasteurisiert (10) wird.

9. Verfahren nach Anspruch 1, bei welchem die Reduktion der bakteriellen Charge und die Entnahme der somatischen Zellen mittels einer Zentrifugal-Klärung stattfinden.

10. Verfahren zum Verarbeiten von Milch welches die Schritte enthält:
Trennen (4) der Milch in einen cremigen Anteil (C) und in einen abgeschöpften Anteil (S);
Mikrofiltern (9) des abgeschöpften Anteils, in einem oder mehreren Stufen unter Verwendung von Filterporenmembranen, Erzeugen eines Permeats mit geringer bakterieller Charge und eines Rückstandes, in welchem jegliche Bakterion und somatische Zellen konzentriert sind;
Pasteurisieren (10) des Permeats, möglicherweise nach Hinzufügung eines Anteils eines cremigen Anteils (C) zum Permeat;
Kühlen (11) auf eine Haltbarkeitstemperatur, welche geringer als die Umgebungstemperatur ist,
**dadurch gekennzeichnet, dass** ein Homogenisierungsschritt (7) zwischen dem cremigen Anteil (C), welcher aus einer Standardisierungsstufe (5) austritt, und einem abgeschöpften Anteil (S), bei einem hohen Druck von ungefähr 300 bar, bereitgestellt ist, sodass der Durchmesser von den Fetttropfen auf ungefähr 0,2 µm kleiner als der Durchmesser von den Poren von den Membranen ist, welche zur Mikrofilterung verwendet werden, wobei die Milch, welche aus der Homogenisierung herrührt, an den Eingang von der Mikrofilterung überführt wird, und zwar zusammen mit dem abgeschöpften Anteil (S), welcher aus einer Zentrifugal-Trennungsstufe (4) austritt,
wobei, vor der Trennung (4) von der Milch in einen cremigen Anteil und einen abgeschöpften Anteil, ein möglicher Schritt einer Vorbehandlung (2) von der gesamten Milch, in einem oder in mehreren Schritten, bereitgestellt werden kann, und zwar mittels von einer zumindest teilweisen Entnahme von einer bakteriellen Charge und von somatischen Zellen.

11. Verfahren nach Anspruch 10, bei welchem die Homogenisierung (7) bei einem solch hohen Druck stattfindet, dass der Durchmesser von den Fetttropfen in dem Produkt, welches aus der Homogenisierung austritt, nicht größer als der Durchmesser von den Poren von den Membranen ist, welche zur Mikrofilterung verwendet werden.

## Revendications

1. Procédé de traitement du lait, du type comprenant les étapes consistant à ;
- séparer (4) le lait en une partie crémeuse (C) et une partie écrémée (S) ;
- microfiltrer (9) la partie écrémée, en une ou plusieurs phases, à l'aide de membranes de filtration poreuses, en produisant un filtrant à faible charge bactérienne et un rétentat où se concentrent les éventuelles bactéries et cellules somatiques ;
- pasteuriser (10) le filtrat, après lui avoir éventuellement ajouté une fraction de partie crémeuse (C) ;
- refroidir (11) à une température de conservation inférieure à la température ambiante,
procédé **caractérisé en ce qu'**il prévoit, avant de séparer (4) le lait en une partie crémeuse et une partie écrémée, une étape de pré-traitement (2) de la totalité du lait, en une ou plusieurs phases, consistant en un retrait au moins partial de la charge bactérienne et des cellules somatiques éliminant 70 à 90 % environ de la charge bactérienne ou des micro-organismes, ainsi que la majorité des impuretés microbiennes et cellulaires et une partie des cellules somatiques susceptibles d'être présents dans le lait, ledit retrait partiel de la charge bactérienne et des cellules somatiques étant obtenu par clarification centrifuge réalisée au moyen d'une centrifugeuse qui évacue les bactéries et les sédiments vers une chambre de boues d'épurations appropriée, ladite clarification conduisant à l'obtention d'un pourcentage de lait supérieur à 90 % qui soit au moins partiellement exempt de bactéries, et d'un déchet (3) inférieur à 1 % constitué d'un concentré bactérien.

2. Procédé selon la revendication 1, dans lequel la partie écrémée (S) du lait est mise à chauffer (8) à 45-65 °C environ pendant 10 à 20 secondes avant microfiltration (9).

3. Procédé selon la revendication 1, dans lequel une fraction au moins de la partie crémeuse (C) 20 est soumise à un traitement de pasteurisation (6) à plus de 100 °C, avant une étape d'homogénéisation (7) et de mélange à la partie crémeuse qui précède le refroidissement final (11).

4. Procédé selon la revendication 1, dans lequel une fraction au moins de la partie crémeuse (C) est homogénéisée puis mélangée à la partie écrémée (S) avant pasteurisation (10).

5. Procédé selon la revendication 1, dans lequel la pasteurisation (10) s'effectue à 72-75 °C environ pendant au moins 15 secondes.

6. Procédé selon la revendication 1, dans lequel le lait, avant la réduction de la charge bactérienne et des cellules somatiques, est préchauffé (1) à 45-65 °C environ.

7. Procédé selon la revendication 1, dans lequel le rétentat est renvoyé au début de l'étape (2) de réduction de la charge bactérienne et des cellules somatiques, ou subit une pasteurisation (6) à plus de 100 °C, ou est envoyé vers une phase supplémentaire de microfiltration (9).

8. Procédé selon la revendication 1, dans lequel le filtrat est homogénéisé (7) puis pasteurisé (10) à 72-75 °C.

9. Procédé selon la revendication 1, dans lequel la réduction de la charge bactérienne et l'élimination des cellules somatiques s'effectuent par clarification centrifuge.

10. Procédé de traitement du lait, du type comprenant les étapes consistant à ;
- séparer (4) le lait en une partie crémeuse (C) et une partie écrémée (S) ;
- microfiltrer (9) la partie écrémée, en une ou plusieurs phases, à l'aide de membranes de filtration poreuses, en produisant un filtrant à faible charge bactérienne et un rétentat où se concentrent les éventuelles bactéries et cellules somatiques ;
- pasteuriser (10) le filtrat, après lui avoir éventuellement ajouté une fraction de partie crémeuse (C) ;
- refroidir (11) à une température de conservation inférieure à la température ambiante,
**caractérisé en ce qu'**une étape d'homogénéisation (7) est prévue entre la partie crémeuse (C) sortant d'une phase de standardisation (5) et une partie écrémée (S), à une pression élevée d'environ 300 bars, de sorte que le diamètre des globules gras soit plus petit, d'environ 0,2 micron, que le diamètre des pores des membranes utilisées pour la microfiltration, le lait issu de ladite homogénéisation étant envoyé à l'entrée de la microfiltration conjointement à la partie écrémée (S) sortant de la phase de séparation centrifuge (4), avant de séparer (4) le lait en une partie crémeuse et une partie écrémée, il est possible de prévoir une étape éventuelle de pré-traitement (2) de la totalité du lait, en une ou plusieurs phases, consistant en un retrait au moins partiel de la charge bactérienne et des cellules somatiques.

11. Procédé selon la revendication 10, dans lequel l'homogénéisation (7) s'effectue à une pression élevée telle que le diamètre des globales gras du produit sortant de l'homogénéisation ne soit pas supérieur au diamètre des pores des membranes utilisées pour la microfiltration.
